Europäisches Patentamt

European Patent Office

Office européen des brevets

(11) Numéro de publication: **0 196 246**

**A1**

## (12) DEMANDE DE BREVET EUROPEEN

(21) Numéro de dépôt: 86400373.6

(22) Date de dépôt: 21.02.86

(51) Int. Cl.⁴: **B23K 9/10**

(30) Priorité: 22.02.85 FR 8502570

(43) Date de publication de la demande:
01.10.86 Bulletin 86/40

(84) Etats contractants désignés:
AT BE CH DE GB IT LI LU NL SE

(71) Demandeur: **LA JOIE**
**Route de Portbail**
**F-50390 Saint-Sauveur le Vicomte Manche(FR)**

(72) Inventeur: **La Joie, Daniel**
**Rue des Petits Pavés**
**F-50390 Saint-Sauveur-le-Vicomte(FR)**
Inventeur: **Boisson, Philippe**
**Hameau Le Bigard Heauville**
**F-50340 Les-Pieux(FR)**

(74) Mandataire: **Chevallier, Robert Marie Georges et al**
**Cabinet BOETTCHER 23, rue La Boétie**
**F-75008 Paris(FR)**

(54) Poste de soudure électrique perfectionné.

(57) Sur des lignes électriques (17,19,21,26...) à interrupteurs et contacteurs de commande de divers organes sont montés en plus de relais principaux des relais auxiliaires ayant des contacts auxiliaires (arc, arg, rg, evg...) montés en série avec des diodes électroluminescentes (31) sur des lignes auxiliaires de signalisation avec un bouton-poussoir - (33) de vérification, de sorte qu'une panne d'un organe quelconque est signalée par l'extinction de la diode (31) correspondante.

EP 0 196 246 A1

Rank Xerox

## Poste de soudure électrique perfectionné

L'invention se rapporte aux postes de soudure électrique avec ou sans utilisation de gaz ; elle a plus précisément pour objet un perfectionnement qui facilite grandement l'identification des pannes et la remise du poste de soudure en état de marche après une panne.

On sait que les postes de soudure sont utilisés de manière intensive dans des conditions de fonctionnement qui sont souvent sévères (température, poussières, humidité, etc...) par du personnel qui est généralement bien qualifié pour ce qui est de l'exécution des soudures mais qui l'est moins quand il s'agit d'identifier et de remédier à des pannes d'origine électrique. Quand une panne de ce genre se produit, il est presque toujours nécessaire de faire appel à un électricien. Outre que l'intervention de ce dernier n'est pas immédiate, parce qu'il est éloigné du lieu d'emploi du poste, la réparation du poste de soudure n'est pas non plus instantanée parce que la conception actuelle de ces postes ne se prête pas à un remplacement rapide des pièces devenues défectueuses.

Un poste de soudure électrique moderne comprend des relais électromagnétiques ou électroniques et les défaillances d'un tel poste sont souvent dues à l'un de ces relais ; en outre, il existe plusieurs organes différents : arrivée de gaz, ventilateur, alimentation en haute fréquence, etc... qui sont mis en service parfois isolément, parfois simultanément. Il est utile de savoir exactement et rapidement si tous ces organes sont en bon état de fonctionnement ou sont la cause d'une panne du poste de soudure.

Dans un poste de soudure comprenant sur différentes lignes électriques divers contacteurs et/ou interrupteurs ou organes équivalents commandant l'alimentation électrique d'un circuit déterminé ou la mise en service d'un organe déterminé, au moyen d'un relais principal, selon l'invention un relais auxiliaire est associé à certains au moins de ces relais principaux, et les contacts auxiliaires des relais auxiliaires sont montés sur des lignes auxiliaires de signalisation comprenant chacune un élément indicateur de courant. Avantageusement, chaque élément auxiliaire indicateur est une diode électroluminescente.

De préférence, les diodes électroluminescentes sont montées en parallèle entre deux conducteurs, chaque diode étant en série avec les contacts du relais auxiliaire correspondant ; en outre, un bouton-poussoir est branché en parallèle avec les contacts de tous les relais.

De préférence encore, dans le cadre de l'invention, les relais et interrupteurs du poste de soudure sont embrochés sur des circuits imprimés et facilement remplaçables.

De cette façon, quand un poste est en panne à cause de la défaillance d'un relais, par exemple, la diode électroluminescente correspondante ne s'allume pas. Le bouton-poussoir permet de vérifier que la panne est bien due à un élément principal et non à la diode puisque ce bouton-poussoir permet d'alimenter directement les diodes en courant électrique sans passer par les contacts des relais auxiliaires.

On donnera maintenant, uniquement à titre d'exemple une description d'un poste de soudure électrique conforme à l'invention. On se reportera aux dessins annexés dans lesquels:

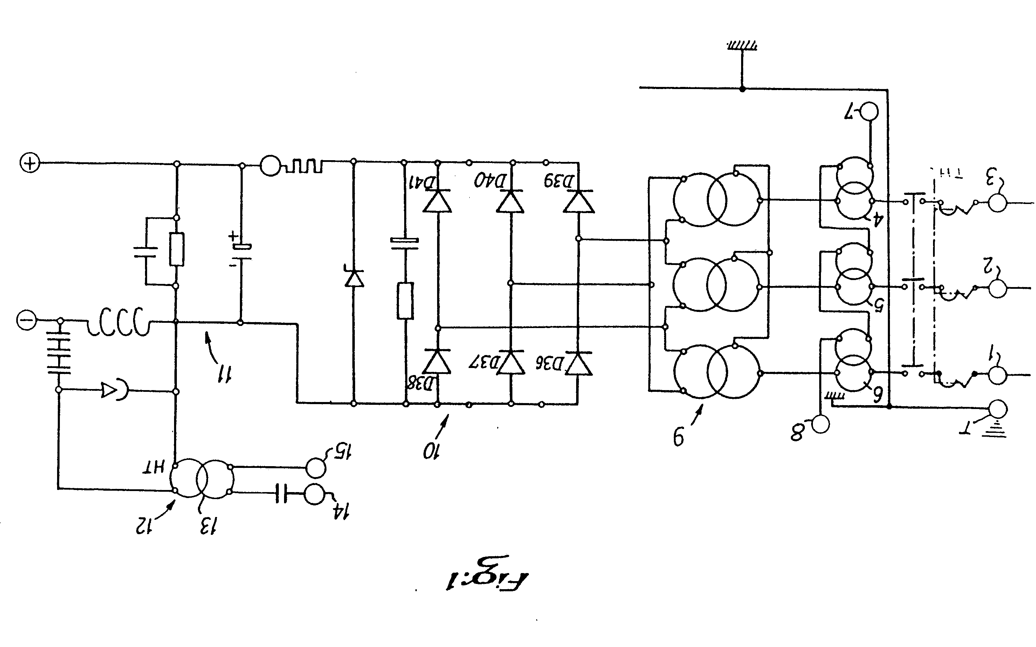

-la figure 1 est un schéma simplifié qui montre le circuit principal de soudage d'un poste de soudure perfectionné selon l'invention,

-la figure 2 est un schéma simplifié qui montre le circuit de commande manuel ou automatique du même poste de soudure ainsi que le schéma du circuit de signalisation des pannes conformément à l'invention.

Les schémas annexés représentent seulement le circuit principal de soudage, à titre d'illustration. Il n'est pas nécessaire de représenter tous les circuits annexes ni les organes annexes qui sont susceptibles d'accompagner un poste de soudure, comme l'équipement d'alimentation en gaz (argon ou autre gaz neutre), le mécanisme d'avancement du fil de soudure s'il y a lieu etc... L'emploi ou non d'équipements annexes n'est pas directement en rapport avec l'invention ; en outre, celle-ci est facilement adaptable, lorsqu'elle a été expliquée et comprise, à tout poste de soudure ayant une constitution différente du poste donné ici en exemple. Ce poste comprend trois bornes d'entrée 1, 2, 3 d'alimentation en courant électrique triphasé à 380 V. Après un disjoncteur THi et ses relais, se trouvent un jeu de trois selfs 4,5,6 du type saturable au moyen d'un circuit de saturation 7,8, puis un transformateur triphasé de puissance 9 muni d'un pont redresseur 10 à six diodes selon le montage dit de Greatz. Au circuit de filtrage 11 qui suit est associé un circuit 12 ayant un transformateur à haute tension 13, alimenté par des bornes 14, 15 à partir d'une source non représentée, pour l'amorçage à haute fréquence de l'arc électrique, à distance de la pièce soudée ; les bornes de sortie du poste sont indiquées par les signes + et -.

Un tel poste est connu et peut comporter d'autres organes, équipement et mécanisme annexe, ainsi qu'on l'a déjà dit.

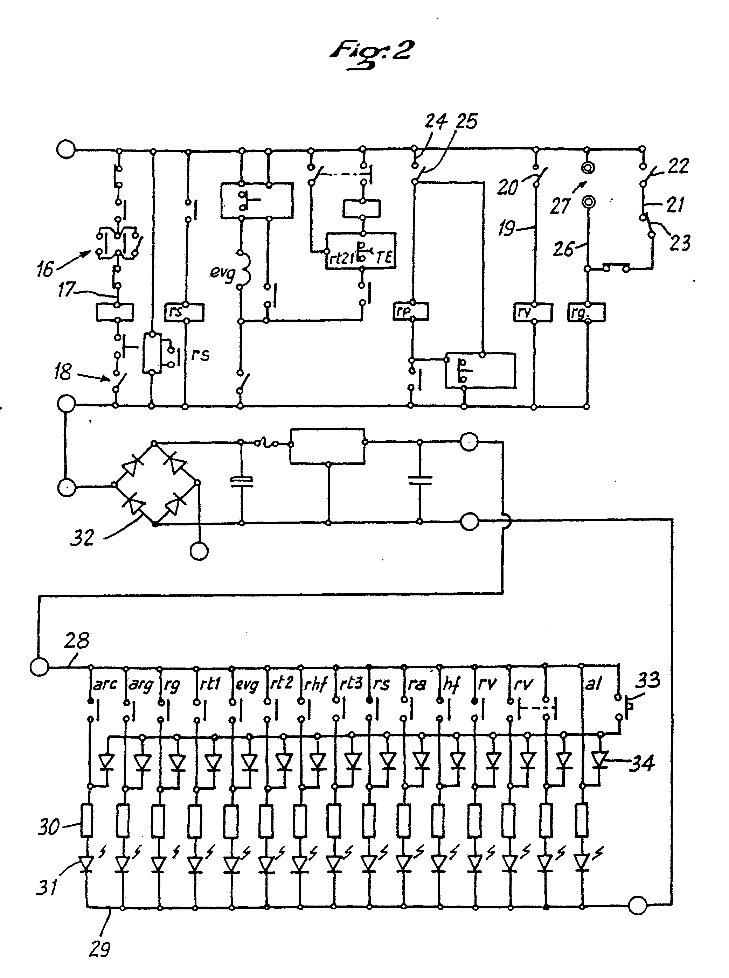

Ce poste est accompagné d'un circuit de commande manuel ou automatique analogue à celui qui est illustré par le schéma de la figure 2, sur lequel on trouve diverses lignes comprenant des relais ou des interrupteurs ; par exemple on trouve les contacts 16 du disjoncteur THi sur une ligne 17 comprenant aussi un interrupteur général 18 ; sur une autre ligne 19 on trouve un interrupteur 20 correspondant à un ventilateur de refroidissement. Comme le poste décrit ici peut fonctionner à l'arc électrique seulement ou sans argon, il existe une ligne 21 avec un interrupteur 22 pour le fonctionnement "arc" et un interrupteur 23 pour le circuit à haute fréquence, ainsi qu'une ligne 24 avec un interrupteur 25 pour le fonctionnement "argon". Sur une autre ligne 26 se trouvent les bornes 27 de la gachette de soudure. Ce circuit de commande est alimenté en courant électrique basse tension à partir d'un transformateur alimenté aussi en 380 V.

Il n'est pas utile d'insister sur les dispositions décrites plus haut qui peuvent varier d'un poste de soudure à un autre. Sur les diverses lignes se trouve au moins un relais dont le fonctionnement est commandé par un interrupteur ou un autre relais ou un organe de commande analogue. Par exemple, sur la ligne 17 il existe un relais ra, sur la ligne 19 un relais rv, sur la ligne 21 un relais rg, sur les lignes 24 et 26 respectivement les relais rp et rg.

Selon l'invention, ces relais peuvent être des relais principaux auxquels sont incorporés des contacts auxiliaires à fermeture ou, en variante, ils peuvent être des relais auxiliaires à contacts auxiliaires qui sont montés en supplément sur la ligne considérée.

Comme le montre la figure 2, les contacts auxiliaires qui correspondent à ces relais auxiliaires sont montés chacun sur des lignes auxiliaires de signalisation parallèles entre deux conducteurs 28, 29, en série avec une résistance convenable 30 et une diode électroluminescente

31. Les deux conducteurs 28, 29 sont reliés à une source de tension appropriée qui comprend un pont redresseur 32. Sur cette figure 2, les contacts auxiliaires sont désignés par les mêmes références alphabétiques que les relais auxquels ils correspondent. Les contacts auxiliaires sont plus nombreux que les relais représentés parce que ces derniers ne sont pas tous visibles sur la figure 2. Dans cet exemple, les fonctions auxquelles sont associés des relais et des contacts auxiliaires sont les suivantes, à partir de leur désignation alphabétique sur la figure 2 :

arc : appareil commuté pour soudure à l'arc

arg : appareil commuté pour soudure sous argon

rg : relais de gachette en fonction

rt 1 : relais temporisé de l'électrovanne de gaz mis en service

evg : circuit de refroidissement commuté pour refroidissement de la torche par le gaz

rt 2 : relais temporisé pour la haute fréquence mis en service

rhf : relais de haute fréquence mis en service

rt 3 : relais temporisé de circulation d'eau mis en service

rs : relais de soudure mis en service

ra : alimentation du transformateur de puissance en service

lif : appareil commuté en position haute fréquence

rp : pompe mise en service

rv : ventilateur mis en service.

D'autres contacts auxiliaires peuvent être prévus si on le désire, en relation avec d'autres fonctions.

Quand les contacts auxiliaires sont fermés, la diode 31 correspondante s'allume. Son extinction pendant le fonctionnement du poste de soudure signale une défaillance correspondante de l'organe qui assure cette fonction. Ainsi, l'identification de l'origine d'une panne est grandement facilitée.

Un bouton-poussoir 33 est relié d'une part au conducteur 28 auquel est relié directement un des contacts auxiliaires et d'autre part à un point intermédiaire entre ces derniers et la résistance 30 qui suit chacun d'eux, par l'intermédiaire d'une diode 34. Ainsi, le bouton-poussoir 33 est branché en parallèle sur l'ensemble des contacts auxiliaires, de sorte que l'enfoncement de ce bouton provoque l'allumage de toutes les diodes électroluminescentes 31. On est donc certain que l'extinction de l'une d'elles pendant la marche du poste de soudure est bien due à une panne.

Etant donné que les relais ou contacteurs sont assez souvent à l'origine de la défaillance d'une fonction, selon l'invention, les relais principaux qui se trouvent sur les lignes telles que 17,19,26,21..., sont du type embrochable par exemple sur un support tel qu'une carte de circuit imprimé. Cette première cause de panne, la plus fréquente, peut donc être éliminée rapidement, même par une personne qui n'est pas particulièrement compétente en électricité. Par exemple, si pendant le fonctionnement le poste tombe en panne et que la diode 31 qui correspond au contact auxiliaire rs est éteinte, cela signifie que la cause est très probablement le relais principal rs. Il suffit de retirer et de remplacer ce dernier pour que le poste de soudure soit à nouveau utilisable.

Il est entendu que l'on a utilisé dans ce qui précède l'expression "relais auxiliaire" tout moyen qui permet de commander la mise en action des éléments indicateurs de signalisation. Par exemple, outre les relais électromécaniques classiques, on peut employer des relais électroniques, par exemple des transistors qui deviennent conducteurs ou qui cessent d'être conducteurs, ainsi qu'il est connu de l'homme de l'art.

## Revendications

1. Poste de soudure électrique comprenant sur différentes lignes électriques (17,19,21,26...) divers organes tels que des contacteurs, interrupteurs, relais... commandant l'alimentation électrique d'un circuit ou organe déterminé au moyen d'un relais principal, caractérisé en ce qu'un relais auxiliaire à contacts auxiliaires est associé à certains au moins des relais principaux et les contacts auxiliaires (arc, arg, rg, evg...) desdits relais auxiliaires sont montés respectivement en série sur des lignes auxiliaires de signalisation avec un élément indicateur de courant constitué de préférence par une diode électroluminescente (31).

2. Poste de soudure selon la revendication 1, caractérisé en ce que les contacts auxiliaires et les diodes électroluminescentes (31) sont montés sur des lignes auxiliaires de signalisation disposées en parallèle entre deux conducteurs (28, 29).

3. Poste de soudure selon la revendication 1 caractérisé en ce qu'un bouton poussoir (33) au moins est branché en parallèle avec chacun des contacts auxiliaires (arc, arg, rg,...).

4. Poste de soudure selon la revendication 1 caractérisé en ce que les relais principaux des lignes électriques - (17,19,21,26,...) sont du type embrochable facilement remplaçable.

5. Poste de soudure selon la revendication 1 caractérisé en ce que les relais auxiliaires à contacts auxiliaires sont incorporés aux relais principaux desdites lignes électriques.

6. Poste de soudure selon la revendication 1 caractérisé en ce que les relais auxiliaires à contacts auxiliaires sont montés en supplément sur lesdites lignes électriques.

Fig.1

*Fig.2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 403 149 (MESSER GRIESHEIM) * Page 4, ligne 14 - page 6, ligne 15; figure 1 * | 1 | B 23 K 9/10 |
| A | US-A-3 567 901 (DEININGER) | | |

DOMAINES TECHNIQUES RECHERCHES (Int. Cl.4)

B 23 K

Le présent rapport de recherche a été établi pour toutes les revendications

| Lieu de la recherche | Date d'achèvement de la recherche | Examinateur |
|---|---|---|
| LA HAYE | 29-05-1986 | DEMOLDER J. |